# FASCICULE DE BREVET EUROPEEN

(11) **EP 0 565 402 B1**
(45) Date de publication et mention de la délivrance du brevet: **14.05.1997**
(21) Numéro de dépôt: 93400797.2
(22) Date de dépôt: 29.03.1993
(51) Int. Cl.: F16H 7/12, F16H 7/08

(54) **Tendeur automatique pour courroie, notamment pour courroie de transmission synchrone, comme une courroie de distribution de moteur thermique**
Automatische Riemenspanner, insbesondere für Synchrontreibriemen, wie ein Riemen zur Ventilsteuerung einer Brennkraftmaschine
Automatic belt tensioner, in particular for timing belts, such as a timing belt for a combustion engine

(30) Priorité: 06.04.1992 FR 9204169
(43) Date de publication de la demande: 13.10.1993
(73) Titulaire: HUTCHINSON, F-75008 Paris (FR)
(72) Inventeur: Varin, Hervé, F-37510 Ballan (FR)
(74) Mandataire: Ores, Irène

(56) Documents cités:
- EP-A- 0 330 362
- DE-B- 1 113 647
- DE-C- 696 571
- FR-A- 2 645 931
- US-A- 4 565 214

## Description

L'invention concerne un tendeur automatique pour courroie, notamment pour courroie de transmission synchrone comme une courroie de distribution de moteur thermique.

Elle vise, en particulier mais sans toutefois être limitée à ce type d'application, un dispositif pour la mise sous tension de la courroie d'une transmission synchrone comme une courroie dentée de distribution d'un moteur d'automobile, c'est-à-dire de la courroie qui, à partir du vilebrequin, entraîne de façon synchrone un ou des arbres à came, une pompe d'injection dans le cas d'un moteur diesel, etc... ; elle englobe également dans son cadre les ensembles comportant un tel tendeur auquel sont associés des moyens de support et de montage sur le moteur, ainsi que les systèmes de distribution comportant un tel ensemble.

On sait qu'un bon fonctionnement d'une courroie de transmission synchrone, par exemple une courroie de distribution de moteur thermique, ne peut être obtenu qu'avec une tension satisfaisante de la courroie et l'on a déjà proposé, pour conférer cette tension à la courroie, des dispositifs connus dans la technique sous le nom de "tendeurs fixes" c'est-à-dire de tendeurs qui après montage sont verrouillés à demeure dans leur condition opératoire. De tels dispositifs, qui introduisent une tension importante dans la courroie et qui ne permettent pas d'absorber les fluctuations de tension, font qu'il apparaît une fatigue importante de la courroie qui abrège sa durée de vie et celle des organes qu'elle entraîne. Aussi a-t-on déjà remplacé les "tendeurs fixes" par des dispositifs dits "automatiques" ou "dynamiques" qui compensent les variations de tension de la courroie en fonctionnement aussi bien lors des phases de démarrage et d'arrêt du moteur que lors de la mise en fonctionnement d'un organe entraîné. Ces dispositifs connus peuvent être classés, en fonction du mode de travail d'un actionneur qui agit sur un galet tendeur appliqué contre la courroie, en dispositifs du type "rotatifs", comme décrits dans FR-A-2 633 689, ou en dispositifs du type "à poussée rotative", comme décrits dans US-A-4 883 446, ou enfin en dispositifs du type "linéaire à poussée axiale" comme décrits, par exemple, dans EP-A1-O 330 362 ou FR-A-2 645 931. En raison des avantages que présentent les systèmes dans lesquels l'actionneur est animé d'un mouvement de coulissement uniquement, -par opposition à ceux où le mouvement est à la fois de coulissement et de rotation ou de rotation seulement-, c'est de tels dispositifs que, d'une manière générale, l'invention vise à perfectionner. Le préambule de la revendication 1 est basé sur FR-A-2 645 931.

De tels tendeurs, qui comprennent un corps de cylindre dans lequel est monté à coulissement un piston qui délimite une chambre de pression et une chambre de réserve d'huile, avec dans le piston au moins un canal de communication des deux chambres et un clapet d'ouverture et de fermeture dudit canal peuvent être, eu égard à certaines particularités de leur fonctionnement, caractérisés par la loi de variation de l'effort engendré en fonction du déplacement du piston ou, en d'autres termes, par la raideur du dispositif, étant entendu que le contrôle de la raideur dans la phase de recul du piston correspond à une optimisation du comportement de l'ensemble de la transmission.

C'est, par conséquent, un but général de l'invention de fournir un tendeur pour courroie, notamment pour courroie de transmission synchrone comme une courroie de distribution de moteur thermique qui, présentant les avantages des dispositifs du type "linéaire à poussée axiale", ait des caractéristiques de fonctionnement meilleures que celles de ces dispositifs connus, notamment en ce qui concerne la progressivité de l'effort appliqué.

C'est, à cet égard, un but de l'invention de fournir un tel dispositif de tendeur qui permette d'augmenter la durée de vie de la courroie à laquelle il est associé.

C'est, aussi, un but de l'invention de fournir un tel dispositif de tendeur qui permette, lorsqu'il est associé à une courroie dentée de distribution d'un moteur d'automobile, d'éviter les sauts de dents lors des phases de démarrage à froid du moteur, d'une part et, d'autre part, assure une stabilité de la tension de la courroie dans toutes les conditions de fonctionnement dudit moteur.

C'est, encore, un but de l'invention de fournir un tel dispositif qui puisse être aisément adapté à des ensembles moteurs différant entre eux par leur géométrie et/ou leurs autres caractéristiques, de sorte qu'un même dispositif de base peut être facilement modifié pour équiper des transmissions synchrones variées.

C'est, enfin, un but de l'invention de fournir un tel dispositif tendeur à structure particulièrement simple et, partant, de faible coût.

Un tendeur automatique pour courroie de transmission synchrone, notamment pour courroie dentée de distribution de moteur thermique, du type "linéaire à poussée axiale", comprenant un galet propre à coopérer avec la courroie et un actionneur dudit galet qui comporte :
. un corps cylindrique ;
. un piston monté à coulissement dans ledit corps qui délimite une chambre de pression et une chambre de réserve d'un fluide hydraulique, lesdites chambres pouvant communiquer entre elles par au moins un canal dudit piston ;
. une tige poussoir solidaire du piston et dont le mouvement est propre à être transmis au galet ;
. un ressort de compression sollicitant le piston en direction de la chambre de réserve ; et
. un clapet logé dans la chambre de pression pour ouvrir ou fermer ledit canal et ainsi permettre ou interdire le passage de fluide hydraulique entre la chambre de pression et la chambre de réserve est caractérisé, selon l'invention, en ce que le piston est percé d'une multiplicité de canaux et en ce que le clapet est une soupape comportant un corps de montage et une partie opératoire qui est constituée par une lèvre souple dont la déformation par flexion et compression l'amène au contact ou l'écarte de son siège pour fermer ou ouvrir lesdits canaux.

Selon encore une autre caractéristique de l'invention la soupape, et en particulier sa partie opératoire, est en un matériau choisi pour ses caractéristiques élastiques de déformation, de préférence du type élastomère ou plastomère.

En variante, la soupape, et en particulier sa partie opératoire, est en un matériau métallique.

Selon encore une autre caractéristique de l'invention, on détermine les caractéristiques de la loi reliant l'effort appliqué au déplacement du piston par un choix de la raideur de la soupape, elle-même déterminée par la forme de la section droite de la lèvre souple qui constitue sa partie opératoire, et par un réglage initial de la distance séparant ladite lèvre de son siège.

Dans une réalisation de l'invention, les canaux reliant la chambre de pression à la chambre de réserve sont disposés coaxialement à l'axe de révolution de la soupape laquelle comporte un corps pour son montage par vissage, sertissage, emmanchement ou analogue sur le piston et une lèvre sensiblement tronconique.

Dans un mode d'exécution préféré de l'invention, le piston présente, sur sa périphérie, une rainure longitudinale, laquelle en augmentant les fuites d'huile de la chambre de pression vers la chambre de réserve permet de modifier la loi d'amortissement du tendeur en fonctionnement dynamique.

D'autres caractéristiques et avantages de l'invention apparaîtront de la description qui suit, faite à titre d'exemple et en référence au dessin annexé dans lequel :
- la figure 1 est une vue très schématique d'une transmission synchrone à courroie incorporant un tendeur selon l'invention ;
- la figure 2 est une vue en coupe longitudinale de l'actionneur à vide, non installé ;
- la figure 3 est une vue analogue à celle de la figure 2, mais pour l'ensemble du tendeur et pour une autre condition de l'actionneur ;
- la figure 4 est une vue par bout d'un piston de dispositif selon l'invention ;
- la figure 5 est une vue en coupe selon la ligne V-V de la figure 4 ;
- les figures 6A, 6B et 6C illustrent le fonctionnement d'un dispositif selon l'invention ;
- la figure 7 montre une variante de réalisation d'une soupape de dispositif selon l'invention ;
- la figure 8 est un diagramme explicatif ;
- les figures 8A et 8B illustrent le réglage initial de la soupape ;
- la figure 9 est un diagramme explicatif ;
- la figure 10 est une vue analogue à celle de la figure 1 illustrant l'implantation d'un ensemble comprenant un tendeur selon l'invention sur le système de distribution d'un moteur de véhicule automobile ;
- la figure 11 est une vue analogue à celle de la figure 2, mais pour un autre mode d'exécution de l'actionneur ;
- la figure 12 est une vue du piston de ce mode d'exécution ;
- la figure 13 est un diagramme.

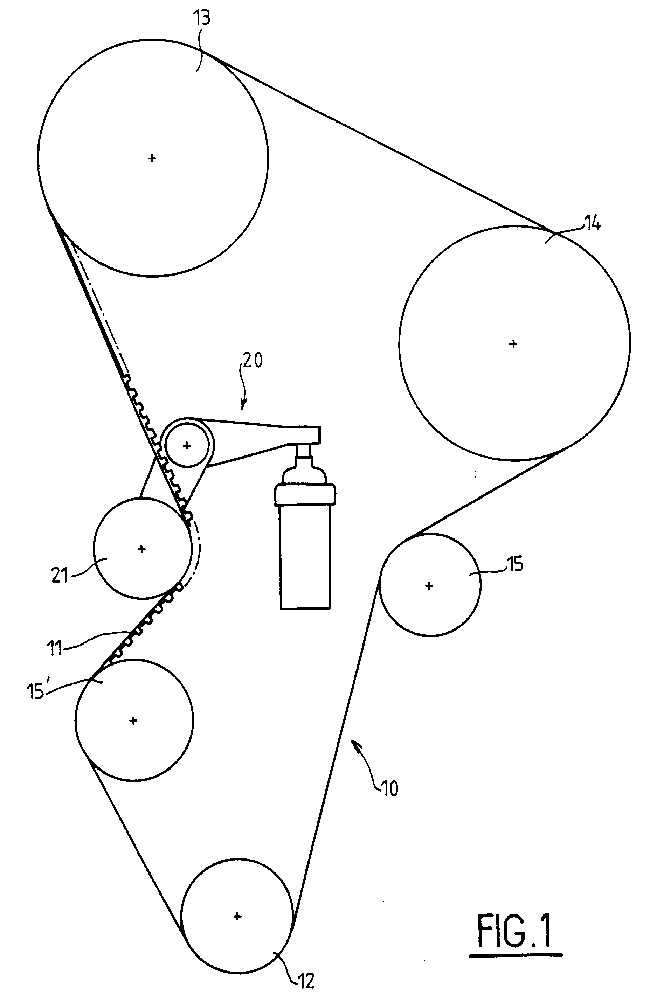

On se réfère d'abord à la figure 1 qui montre, très schématiquement, une transmission synchrone 10 qui est, par exemple, celle d'un système de distribution d'un moteur de véhicule automobile et où une courroie dentée 11, entraînée par un vilebrequin 12, transmet la puissance fournie par celui-ci à un arbre à came 13, une pompe à injection 14 dans le cas d'un moteur diesel, une ou des prise(s) de puissance auxiliaire(s) 15, 15', etc... Un tendeur dynamique 20 est prévu pour compenser les variations de tension de la courroie 11 aussi bien lors des phases de démarrage et d'arrêt du moteur que lors du fonctionnement normal du moteur et des organes 13, 14, 15, 15'... etc.

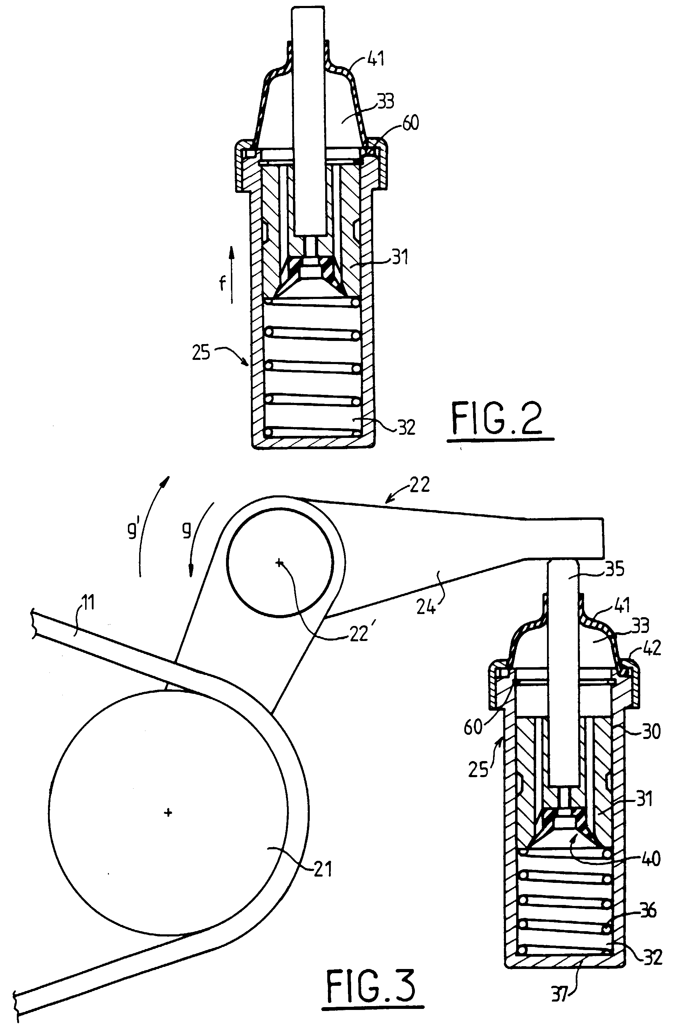

Le dispositif de tendeur selon l'invention, qui est disposé sur le brin mou de la courroie 11, agit sur cette dernière par l'intermédiaire d'un galet 21, figure 3, porté par un levier coudé 22 monté à pivotement autour d'un axe 22' et dont le bras 24 peut être déplacé par un actionneur 25 qui constitue l'élément essentiel du tendeur selon l'invention.

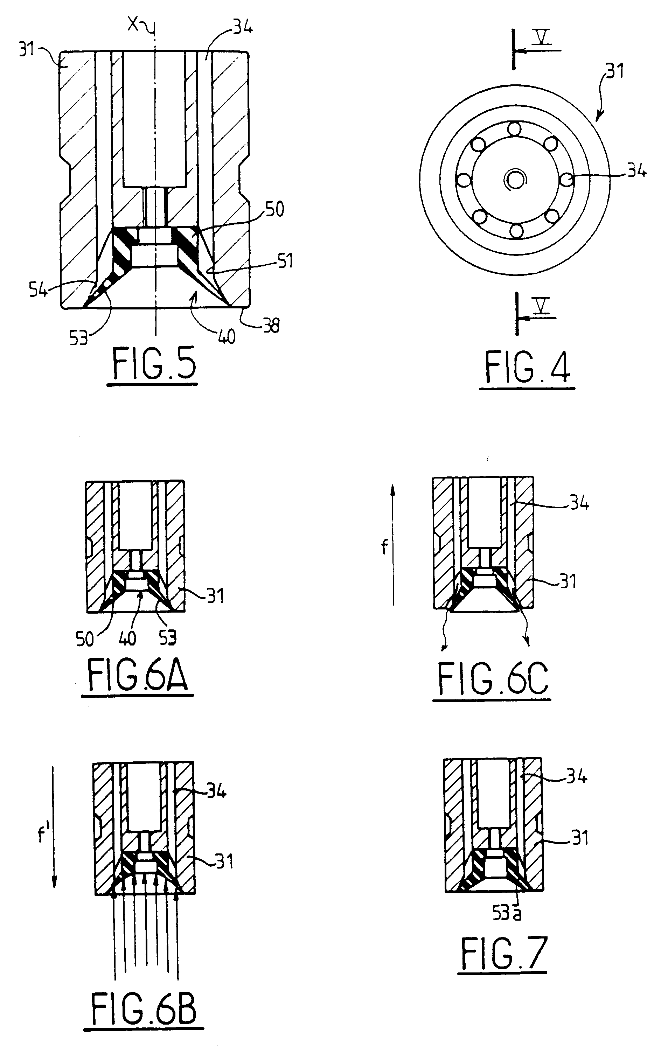

L'actionneur 25, représenté sur la figure 2 dans sa position à vide, non installé, comprend ainsi:
. un corps cylindrique 30, par exemple en acier, fixé directement sur le moteur ou une pièce moteur du véhicule automobile ou sur ledit moteur ou ladite pièce par l'intermédiaire d'une platine, la liaison entre le corps et l'ensemble qui le supporte étant réalisée rigidement ou par l'intermédiaire d'articulations élastiques en torsion ;
. un piston 31 en bronze ou métal d'usure (figures 4 et 5) monté à coulissement dans le cylindre 30 et qui délimite une chambre de pression 32 et une chambre de réserve 33 pour un fluide hydraulique comme de l'huile, les chambres 32 et 33 pouvant communiquer par des canaux 34 ;
. une tige poussoir 35 liée au piston 31 et dont le mouvement commande celui du bras 24 par une liaison à contact direct ou à articulation(s) élastique(s) en torsion ;
. un ressort de compression 36 interposé entre le fond 37 du corps 30 et une face annulaire de butée 38 du piston 31 pour solliciter le piston en direction de la chambre de réserve, c'est-à-dire à déplacement suivant la direction de la flèche f de la figure 2 ; et
. un clapet 40 logé dans la chambre de pression 32 pour ouvrir ou fermer les canaux 34 et ainsi permettre ou interdire le passage du fluide hydraulique entre la chambre de pression et la chambre de réserve comme il sera précisé ci-après.

Comme bien visible sur les figures 2 et 3, ladite chambre de réserve est limitée par une pièce en matériau élastique 41, par exemple en caoutchouc, entourant et fixée à étanchéité sur la tige-poussoir 35 d'une part et, d'autre part, solidaire du cylindre 30 par un sertissage à l'aide d'une bague 42 ou un moyen analogue.

Selon l'invention, le clapet 40 est une soupape comprenant un corps 50 de montage dans un alésage 51 du piston 31 et une partie opératoire constituée par une lèvre souple 53, -de forme sensiblement tronconique et à section droite par un plan axial sensiblement triangulaire-, dont la déformation par flexion et compression l'amène au contact ou l'écarte du siège également tronconique 54 prévu à l'extrémité de l'alésage 51 du piston 31. La soupape 40 qui est solidarisée au piston 31 par vissage, sertissage, emmanchement ou analogue, peut être réalisée en totalité en un matériau choisi pour ses caractéristiques élastiques de déformation, de préférence du type élastomère ou plastomère.

En variante, la soupape 40 ou, pour le moins, sa lèvre opératoire 53, est en un matériau métallique.

Quel que soit le matériau constitutif de la soupape, celle-ci ne présente pas de partie en contact frottant avec le corps cylindrique, avec pour conséquence un avantage important en ce qui concerne l'usure du dispositif, l'ouverture et la fermeture des canaux 34 étant réalisée par une déformation en flexion et compression de la lèvre 53 (figures 5 et 6).

Par un choix approprié de la section droite de ladite lèvre, par exemple non plus sensiblement triangulaire mais quelque peu trapézoïdale, comme montré sur la figure 7, il est possible de modifier la raideur de la soupape, le choix de cette raideur, d'une part, et le réglage de la distance initiale comprise entre la partie opératoire de la soupape et le siège 54, d'autre part, permettant de calibrer la loi de l'effort exercé en fonction du déplacement du piston lors du fonctionnement de l'actionneur, lequel résulte d'ailleurs immédiatement de ce qui précède.

Dans la condition initiale de repos de l'actionneur non installé, qui est celle montrée sur la figure 2, le piston 31 est en butée au voisinage de l'extrémité de la chambre de réserve 33 contre un circlip 60 : le volume de la chambre de pression 32 est maximal et celui de la chambre de réserve 33 minimal, la pièce élastique 41 qui assure la compensation de volume de ladite chambre étant dans sa condition non sollicitée. Après montage de l'actionneur dans sa position de travail, la condition du tendeur est celle montrée sur la figure 3 en laquelle le ressort 36, -dont la force est choisie de manière idoine-, communique à la courroie 11 une tension statique suffisante dans toutes les conditions de fonctionnement par l'intermédiaire du piston 31, du poussoir 35 et du levier coudé 22 qui tend à tourner dans le sens de la flèche g autour de l'axe 22' entraînant avec lui le galet 21.

Lorsque, à partir de cette condition, la tension du brin tendu de la courroie augmente, par exemple à la suite d'une prise de puissance par un organe auxiliaire 15 ou lors de la phase de démarrage du moteur qu'équipe la courroie, -et que la tension sur le brin mou de la courroie décroît-, le galet 21 est moins sollicité par la courroie : sous l'action du ressort 36 le piston 31 et le poussoir 35 tendent à se déplacer dans le sens de la flèche f pour faire pivoter le levier coudé 22 dans le sens de la flèche g. Au cours de ce mouvement du piston, la lèvre souple 53 du clapet 40 s'écarte du siège 54, figure 6C, permettant un passage rapide de l'huile, -avantageusement choisie pour ses caractéristiques de fluidité appropriées entre -40° et 140°C par exemple-, de la chambre de réserve 33 à la chambre de pression 32 au travers des nombreux canaux 34.

Lorsque, par contre, la tension sur le brin mou augmente, par exemple en phase moteur de l'arbre à came avec pour conséquence une plus grande sollicitation du galet 21 par la courroie 11, le levier coudé 22 tend à tourner dans le sens de la flèche g' (inverse de celui de la flèche g). Le bras 24 du levier 22 appuie sur le poussoir 35, lequel tend à se déplacer, avec le piston 31, dans le sens de la flèche f' (inverse de celui de la flèche f), figure 6B. Lors de ce déplacement, la soupape 40 se ferme rapidement, mais sans choc, empêchant le passage d'huile dans les canaux 34. L'accroissement d'effort qui en résulte s'oppose à une diminution de tension du brin tendu et élimine, par conséquent, le risque de saut de dent de la courroie.

A l'arrêt du moteur qu'équipe la courroie un passage d'huile a lieu entre la surface interne du cylindre 30 et le piston 31 pour la compensation des dilatations des pièces du moteur.

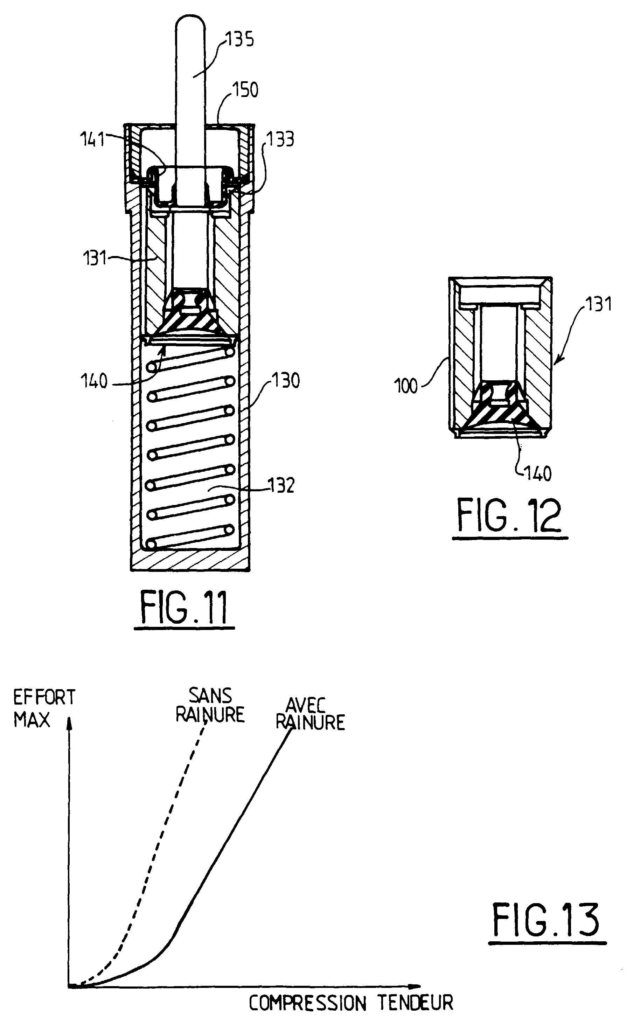

Un tendeur selon l'invention permet d'obtenir une montée en effort en fonction du mouvement du piston plus progressive et plus facilement réglable que celle obtenue à l'aide des dispositifs connus, la pente de la courbe représentative de la loi effort/mouvement du piston d'un tendeur selon l'invention, montrée en A sur la figure 9, étant plus faible que celle des dispositifs connus montrée en C.

Complémentairement, la pente de cette courbe représentative peut être modifiée, pour être comme montrée en B sur la figure 9, et cela par un changement de la raideur de la soupape, par exemple en conformant la lèvre opératoire de celle-ci comme montré en 53a sur la figure 7 où la section droite de la lèvre est de forme trapézoïdale et non plus triangulaire comme dans les réalisations selon les figures précédentes.

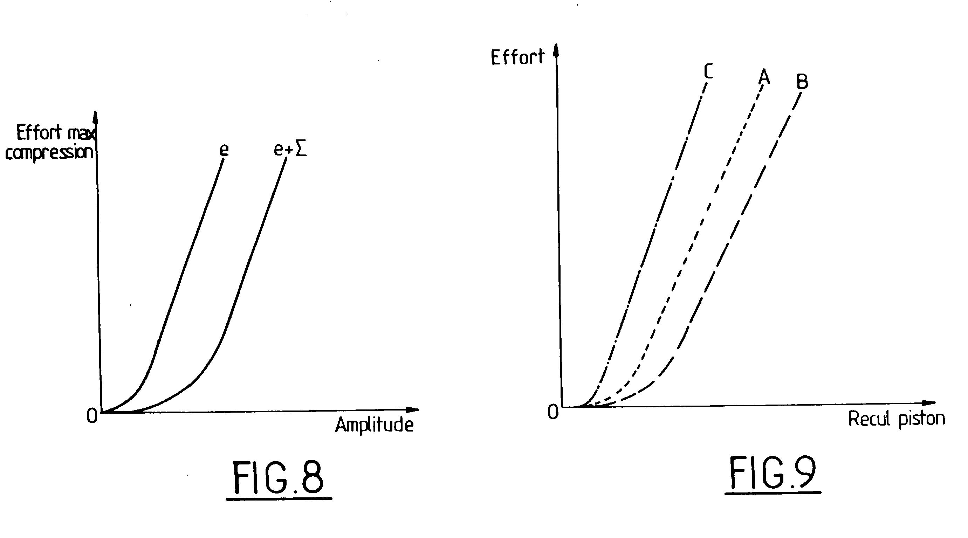

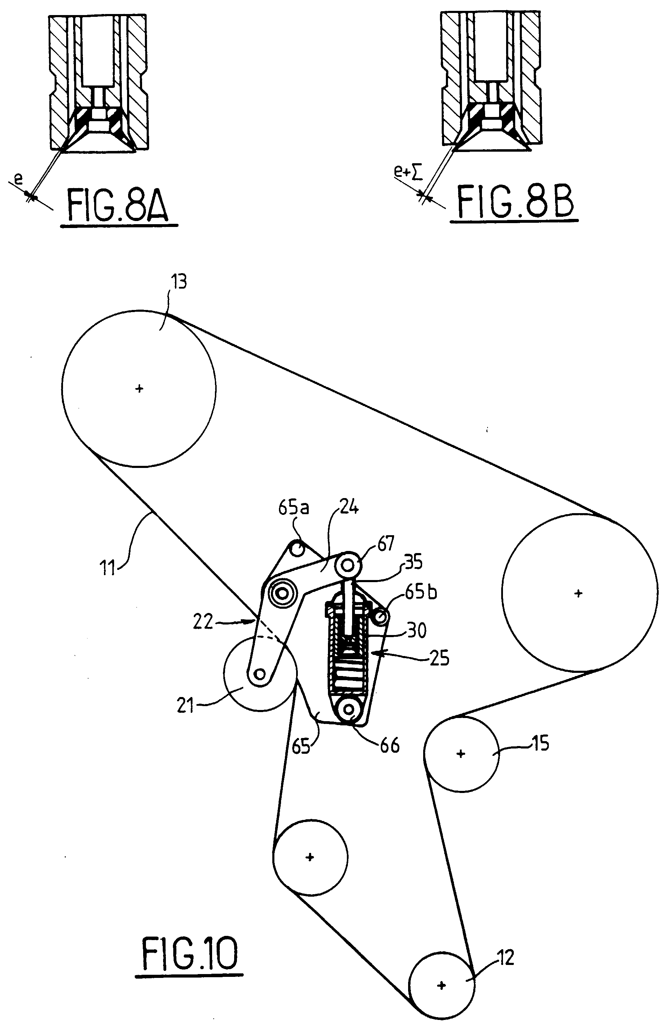

La loi de variation de l'effort maximal de compression en fonction du mouvement du piston peut également être calibrée par un choix approprié de la distance initiale comprise entre la lèvre 53 ou 53a de la soupape 40 et le siège de soupape 54, une augmentation de Σ de cette distance introduisant un décalage de la courbe représentative par rapport à l'origine O, comme montré sur la figure 8 où apparaissent les courbes relatives à une distance initiale e (figure 8A) et à une distance initiale e+Σ (figure 8B).

Dans le mode d'exécution d'un tendeur selon l'invention illustré sur les figures 11 et 12, le piston 131 monté à coulissement dans le corps cylindrique 130, comme dans les réalisations décrites ci-dessus, est cependant muni, sur sa périphérie, d'une rainure longitudinale 100 s'étendant sur toute la longueur du piston, rainure qui permet d'augmenter les fuites d'huile entre la chambre de pression 132 et la chambre de réserve 133, laquelle est limitée par une pièce en matériau élastique 141, en forme générale de cuvette à rebord et qui est fixée à étanchéité, d'une part, sur la tige poussoir 135 et, d'autre part, solidaire du cylindre 130 par son rebord à l'aide d'un sertissage ou par un moyen analogue. Dans ce mode d'exécution, qui pour le reste est semblable aux réalisations décrites ci-dessus, notamment en ce qui concerne le clapet 140 logé dans la chambre de pression 132 pour ouvrir ou fermer les canaux que présente le piston, un cache de protection 150 est également solidaire du cylindre 130, dans la partie de celui-ci opposée à la chambre 132, cache qui est traversé par la tige 135.

Avec un tel mode d'exécution la courbe représentative de l'effort maximum en fonction de la compression du tendeur est comme montrée en trait plein sur la figure 13, alors que celle d'un tendeur correspondant mais sans rainure longitudinale dans le piston est comme montrée en trait mixte.

L'invention englobe également dans son cadre les ensembles comportant un tendeur tel que décrit précédemment auquel sont associés des moyens de support et de montage sur le moteur. Comme montré sur la figure 10, un tel ensemble comprend : un actionneur 25 dont le corps cylindrique 30 est monté sur une platine 65 (à moyens de fixation 65a et 65b sur le moteur) par une articulation élastique en torsion 66 (par exemple à anneaux de caoutchouc) une articulation semblable 67 étant prévue entre l'extrémité libre du poussoir 35 et le bras 24 du levier coudé 22 qui porte le galet 21 coopérant avec la courroie 11.

## Revendications

1. Tendeur automatique pour courroie de transmission synchrone, notamment du type "linéaire à poussée axiale" pour courroie dentée de distribution de moteur thermique, comprenant un galet (21) propre à coopérer avec la courroie (11) et un actionneur (25) dudit galet qui comporte :
. un corps cylindrique (30, 130) ;
. un piston (31, 131) monté à coulissement dans ledit corps qui délimite une chambre de pression (32, 132) et une chambre de réserve (33, 133) d'un fluide hydraulique, lesdites chambres pouvant communiquer entre elles par au moins un canal dudit piston ;
. une tige poussoir (35, 135) solidaire du piston et dont le mouvement est propre à être transmis au galet;
. un ressort de compression (36) sollicitant le piston en direction de la chambre de réserve ; et
. un clapet (40, 140) logé dans la chambre de pression pour ouvrir ou fermer ledit canal et ainsi permettre ou interdire le passage de fluide hydraulique entre la chambre de pression et la chambre de réserve, caractérisé en ce que le piston (31, 131) est percé d'une multiplicité de canaux (34) et en ce que le clapet (40, 140) est une soupape comportant un corps (50) de montage et une partie opératoire constituée par une lèvre souple (53, 53a) dont la déformation par flexion et compression l'amène au contact ou l'écarte de son siège (54) pour fermer ou ouvrir lesdits canaux (34).

2. Tendeur selon la revendication 1, caractérisé en ce que la soupape (40, 140) et, en particulier sa partie opératoire (53, 53a), est en un matériau choisi pour ses caractéristiques élastiques de déformation, de préférence du type élastomère ou plastomère.

3. Tendeur selon la revendication 1, caractérisé en ce que la soupape (40, 140) et, en particulier sa partie opératoire (53, 53a), est en un matériau métallique.

4. Tendeur selon l'une quelconque des revendications précédentes, caractérisé en ce que la raideur de la soupape (40) est déterminée par la forme de la section droite de la lèvre souple qui définit sa partie opératoire et par un réglage initial de la distance (e, e+Σ) séparant la lèvre (53, 53a) du siège (54) de soupape, et que cette raideur détermine la loi reliant l'effort appliqué en fonction du déplacement du piston (31).

5. Tendeur selon l'une quelconque des revendications précédentes, caractérisé en ce que les canaux (34) reliant la chambre de pression (32, 132) à la chambre de réserve (33, 133) sont disposés coaxialement à l'axe de révolution de la soupape, que ledit corps (50) de montage permet la fixation de la soupape par vissage, sertissage, emmanchement ou analogue sur le piston (31, 131) et que ladite lèvre souple (53, 53a) est sensiblement tronconique.

6. Tendeur selon l'une quelconque des revendications précédentes, caractérisé en ce que le piston (131) présente, sur sa périphérie, une rainure longitudinale (100) laquelle, en augmentant les fuites d'huile de la chambre de pression (132) vers la chambre de réserve (133) permet de modifier la loi d'amortissement du tendeur en fonctionnement dynamique.

7. Ensemble de mise sous tension d'une courroie de transmission synchrone, caractérisé en ce qu'il comprend un tendeur (20) selon l'une quelconque des revendications précédentes associé directement ou avec interposition d'articulations élastiques en torsion (66, 67) à une platine (65) de fixation sur un moteur d'automobile ou une pièce de moteur d'automobile .

8. Transmission synchrone à courroie, caractérisée en ce qu'elle comprend un tendeur selon l'une quelconque des revendications 1 à 6 ou un ensemble selon la revendication 7.

## Patentansprüche

1. Automatisches Spannglied für Treibriemen mit synchroner Transmission, insbesondere vom Typ "linear mit Axialschub" für Verteilerzahnriemen einer Brennkraftmaschine, umfassend: eine Rolle (21), die so ausgelegt ist, daß sie mit dem Treibriemen (11) und einem Betätigungsglied (25) für diese Rolle zusammenwirkt, welches umfaßt:
. ein zylindrisches Gehäuse (30, 130);
. einen Kolben (31, 131), der gleitverschieblich in diesem Gehäuse gelagert ist, welches eine Druckkammer (32, 132) und eine Reservekammer (33, 133) für ein hydraulisches Fluid begrenzt, wobei diese Kammern miteinander über wenigstens einen Kanal dieses Kolbens in Verbindung stehen können;
. eine Schubstange (35, 135), die fest bezüglich des Kolbens ist und deren Bewegung geeignet ist, auf die Rolle übertragen zu werden;
. eine Kompressionsfeder (36), die den Kolben in Richtung der Reservekammer beaufschlagt; und
. ein Sperrventil (40, 140), das in der Druckkammer gelagert ist, um diesen Kanal zu öffnen oder zu schließen und so den Durchlaß hydraulischen Fluids zwischen der Druckkammer und der Reservekammer zu ermöglichen oder zu unterbinden,
dadurch gekennzeichnet, daß der Kolben (31, 131) von einer Vielzahl von Kanälen (34) durchbohrt ist und daß das Sperrventil (40, 140) ein Ventil bzw. eine Klappe, die ein Montagegehäuse (50) sowie ein Arbeitsteil umfaßt, ist, das durch eine nachgiebige Lippe (53, 53a) gebildet ist, deren Deformation durch Flexion und Kompression sie in Kontakt mit einem Sitz (54) führt oder sie davon entfernt, um diese Kanäle (34) zu schließen oder zu öffnen.

2. Spannglied nach Anspruch 1, dadurch gekennzeichnet, daß das Sperrventil (40, 140) und insbesondere sein Arbeitsteil (53, 53a) aus einem Material ist, das wegen seiner elastischen Verformungseigenschaften ausgewählt wurde und vorzugsweise vom Typ Elastomer oder Plastomer ist.

3. Spannglied nach Anspruch 1, dadurch gekennzeichnet, daß das Sperrventil (40, 140) und insbesondere sein Arbeitsteil (53, 53a) aus einem metallischen Material besteht.

4. Spannglied nach einem der vorhergehenden Ansprüche, dadurch gekennzeichnet, daß die Steifigkeit des Ventils (40) bestimmt wird durch die Form des geraden Querschnitts der nachgiebigen Lippe, die ihren Arbeitsteil definiert und für eine Anfangseinstellung der Entfernung (e, e+Σ) die Lippe (53, 53a) vom Sitz (54) von Ventil oder Klappe trennt und daß diese Steifigkeit bestimmt wird durch das Gesetz, das die aufgebrachte Beanspruchung als Funktion mit der Kolbenbewegung (31) verknüpft.

5. Spannglied nach einem der vorhergehenden Ansprüche, dadurch gekennzeichnet, daß die die Druckkammer (32, 132) mit der Reservekammer (33, 133) verbindenden Kanäle (34) koaxial zur Drehachse des Ventils angeordnet sind und daß dieses Montagegehäuse zur Befestigung des Ventils durch Verschrauben, Bördeln, Stecken oder dergleichen auf den Kolben (31, 131) ermöglicht und daß diese nachgiebige Lippe (53, 53a) im wesentlichen konisch oder kegelstumpfförmig ist.

6. Spannglied nach einem der vorhergehenden Ansprüche, dadurch gekennzeichnet, daß der Kolben (131) auf seinem Umfang eine Längsnut (100) aufweist, die, unter Erhöhung der ölverluste aus der Druckkammer (132) gegen die Reservekammer (133), es ermöglicht, das Dämpfungsgesetz des Spannglieds im dynamischen Betrieb zu modifizieren.

7. Anordnung, um einen Treibriemen mit synchroner Transmission unter Spannung zu setzen, dadurch gekennzeichnet, daß sie ein Spannglied (20) nach einem der vorhergehenden Ansprüche, direkt zugeordnet oder unter Zwischenschaltung von torsionselastischen Gelenkelementen (66, 67) zu einer Platine (65) hat, die der Befestigung auf einem Automobilmotor oder einem Automobilmotorteil dient.

8. Synchrone Treibriementransmission, dadurch gekennzeichnet, daß sie ein Spannglied nach einem der Ansprüche 1 bis 6 oder eine Anordnung nach Anspruch 7 umfaßt.

## Claims

1. Automatic tensioning means for a synchronous drive belt, in particular of the "linear axial thrust" type, for a toothed distribution belt of a heat engine comprising a roller (21) intended for cooperating with the belt (11) and a means (25) for actuating the said roller which has:
- a cylindrical body (30, 130);
- a piston (31, 131) slidably mounted in the said body which delimits a pressure chamber (32, 132) and a supply chamber (33, 133.) for a hydraulic fluid, the said chambers being able to communicate with one another by way of at least one channel in the said piston;
- a pushrod (35, 135) which is integral with the piston and whereof the movement is intended to be transmitted to the roller;
- a compression spring (36) urging the piston towards the supply chamber; and
- a flap (40, 140) housed in the pressure chamber to open or close the said channel and thus to allow or block the passage of hydraulic fluid between the pressure chamber and the supply chamber, characterized in that the piston (31, 131) has a plurality of channels (34) pierced within it, and in that the flap (40, 140) is a valve comprising a mounting body (50) and a functional part formed by a flexible lip (53, 53a) whereof the deformation by flexion and compression brings it into contact with or draws it away from its seat (54) to close or open the said channels (34).

2. Tensioning means according to Claim 1, characterized in that the valve (40, 140), and in particular its functional part (53, 53a), is of a material selected for its resilient properties of deformation, preferably of the elastomer or plastomer type.

3. Tensioning means according to Claim 1, characterized in that the valve (40, 140), and in particular its functional part (53, 53a), is of a metal material.

4. Tensioning means according to any one of the preceding claims, characterized in that the rigidity of the valve (40) is determined by the shape of the cross-section of the flexible lip which defines its functional part and by an initial adjustment of the distance (e, e+Σ) separating the lip (53, 53a) from the valve seat (54) and in that this rigidity determines the principle connecting the applied stress as a function of the displacement of the piston (31).

5. Tensioning means according to any one of the preceding claims, characterized in that the channels (34) connecting the pressure chamber (32, 132) to the supply chamber (33, 133) are arranged coaxially with respect to the axis of rotation of the valve, in that said mounting body (50) enables the valve to be fixed by screwing, crimping, shrinking or similar onto the piston (31, 131) and in that said flexible lip (53, 53a) is substantially frustoconical.

6. Tensioning means according to any one of the preceding claims, characterized in that the piston (131) has on its periphery a longitudinal groove (100) which, while increasing the oil leakages from the pressure chamber (132) to the supply chamber (133) enables the damping principle of the tensioning means during dynamic operation to be modified.

7. Assembly for tensioning a synchronous drive belt, characterized in that it comprises a tensioning means (20) according to any one of the preceding claims which is associated, directly or with the interposition of torsionally resilient joints (66, 67), with a plate (65) for fixing onto a motor vehicle engine or a motor vehicle engine part.

8. Synchronous belt drive, characterized in that it comprises a tensioning means according to any one of Claims 1 to 6 or an assembly according to Claim 7.
